# EUROPEAN PATENT APPLICATION

(11) **EP 4 603 183 A1**
(43) Date of publication of application: **20.08.2025**
(21) Application number: 25158023.9
(22) Date of filing: 14.02.2025
(51) Int. Cl.: B01J 23/63, B01J 35/30, B01J 35/45, B01J 35/70, B01J 37/03, B01J 37/08, B01J 37/18, C01B 3/04

(54) **METHOD OF PREPARING CATALYST FOR AMMONIA DECOMPOSITION, AND CATALYST FOR AMMONIA DECOMPOSITION**

(30) Priority: 16.02.2024 KR 20240022493
(71) Applicant: SK Innovation Co., Ltd., Seoul 03188 (KR)
(72) Inventor: CHOI, Jae Suk, 34124 Daejeon (KR); SUNG, Jong Baek, 34124 Daejeon (KR); LEE, Seung Woo, 34124 Daejeon (KR); IM, Ju Hwan, 34124 Daejeon (KR)
(74) Representative: Prüfer & Partner mbB Patentanwälte · Rechtsanwälte

(57) **Abstract**

According to the embodiments of the present disclosure, an ammonia decomposition catalyst may be prepared by performing heat treatment on alumina, a lanthanum compound and a cerium compound in a reducing gas atmosphere to form a composite oxide on an alumina support, and supporting an active metal including ruthenium on the composite oxide. According to further embodiments, the present disclosure provides a catalyst with improved dispersibility which is particularly suitable for ammonia decomposition.

## Description

### [BACKGROUND OF THE INVENTION]

### Field of the Invention

The present disclosure relates to a method of preparing a catalyst for ammonia decomposition ("an ammonia decomposition catalyst"). The present disclosure further relates to a catalyst which is particularly suitable for ammonia decomposition.

### Description of the Related Art

Due to problems of environmental pollution, the demand for a renewable alternative energy is increasing in order to replace the use of fossil fuels such as petroleum and coal. Hydrogen may be mainly used as one of the renewable alternative energies.

As a material capable of efficiently storing and transporting hydrogen, ammonia (NH₃) may be used. For example, hydrogen may be extracted by using a reaction in which ammonia (NH₃) is decomposed into hydrogen (H₂) and nitrogen (N₂).

However, since the process in which ammonia is decomposed into hydrogen and nitrogen is an endothermic process, a large amount of heat and energy may be consumed. Therefore, when obtaining hydrogen gas through the ammonia decomposition reaction, the amount of heat and energy consumed may increase. To obtain high-purity hydrogen with high efficiency, an ammonia decomposition catalyst may be used.

The ammonia decomposition catalyst may decompose ammonia at a low temperature by using an active metal such as a transition metal including nickel or iron, etc., or a platinum metal including palladium or ruthenium, etc. Among the active metals, the platinum metal has high activity for the ammonia decomposition reaction, but it is rare and expensive compared to the transition metal such as nickel or iron, which may decrease the workability and economic advantages.

In addition, research is being carried out to develop an ammonia decomposition catalyst that can decompose ammonia with high efficiency at low costs by preventing aggregation of the metal particles when metal particles are included in a support of the ammonia decomposition catalyst.

### [SUMMARY OF THE INVENTION]

An object of the present disclosure is to provide a method of preparing an ammonia decomposition catalyst with improved dispersibility.

In a method of preparing a catalyst for ammonia decomposition according to embodiments of the present disclosure, by performing heat treatment on alumina, a lanthanum compound and a cerium compound in a reducing gas atmosphere including hydrogen, a composite oxide is formed on an alumina support. An active metal, such as including ruthenium, is supported on the composite oxide. The heat treatment is suitably applied to a mixture of alumina, the lanthanum compound and the cerium compound

In some embodiments, the active metal may further include a promoter including at least one of cesium (Cs), sodium (Na), potassium (K), lithium (Li), rubidium (Rb), francium (Fr), barium (Ba), calcium (Ca), strontium (Sr), beryllium (Be) and magnesium (Mg).

In some embodiments, the composite oxide may be formed by performing heat treatment on the alumina, the lanthanum compound and the cerium compound at a temperature of greater than 600 °C and 1,000 °C or lower.

In some embodiments, the composite oxide may be formed by performing heat treatment on the alumina, the lanthanum compound and the cerium compound at a temperature of 900 °C to 1,000 °C.

In some embodiments, the reducing gas may include hydrogen in an amount of 10% by volume to 100% by volume based on a total volume of the reducing gas.

In some embodiments, the composite oxide may contain lanthanum, cerium and aluminum.

In some embodiments, the composite oxide may be formed by doping lanthanum derived from the lanthanum compound and cerium derived from the cerium compound on a surface of the alumina.

In some embodiments, the alumina support may include Al₂O₃.

In some embodiments, the composite oxide may have a perovskite structure.

In some embodiments, a ratio of the perovskite structure in a crystal structure of the composite oxide may be 5% or more, and/or 99% of less; or the ratio may be 5% to 99%.

In some embodiments, the active metal including ruthenium may be supported on the composite oxide by mixing the composite oxide and the active metal including ruthenium, and performing heat treatment.

In some embodiments, a heat treatment temperature on the composite oxide and the active metal may be at about the same or equal temperature as a heat treatment temperature on the alumina, the lanthanum compound and the cerium compound; optionally or preferably the heat treatment temperature on the composite oxide and the active metal may be lower than the heat treatment temperature on the alumina, the lanthanum compound and the cerium compound.

In some embodiments, the heat treatment temperature on the composite oxide and the active metal may be 200 °C to 1,000 °C.

In some embodiments, the heat treatment temperature on the composite oxide and the active metal may be 400 °C to 800 °C.

In some embodiments, the step of supporting an active metal including ruthenium on the composite oxide may be performed in a reducing gas atmosphere.

In some embodiments, a content of ruthenium supported on the composite oxide may be 1.5% by weight or less, and/or may be 0.1% by weight or more, preferably may be less than 1.5% by weight based on a total weight of the composite oxide and the active metal.

In some embodiments, the content of ruthenium supported on the composite oxide may be 0.1% by weight to 1.3% by weight based on the total weight of the composite oxide and the active metal.

In an ammonia decomposition catalyst produced according to the embodiments of the present disclosure, the dispersion of the active metal is improved, such that ammonia may be decomposed with a relatively low content to obtain high-purity hydrogen.

In a further aspect, the present disclosure provides a catalyst comprising a composite oxide on an alumina support; and an active metal including ruthenium supporting on the composite oxide, wherein the composite oxide has a perovskite structure, and wherein the ruthenium content (wt%), as calculated by Equation 1 is 1.5wt.% or lower: Ruthenium content (wt%) = [Ruthenium content (weight) included in ruthenium compound/{Content (weight) of composite oxide + Ruthenium content (weight) included in ruthenium compound}] × 100.

The catalyst may be particularly suitable for ammonia decomposition.

In some embodiments, the composite oxide is a lanthanum cerium composite oxide.

In some embodiments, the catalyst and optionally the lanthanum cerium composite oxide mainly shows a perovskite structure, preferably a ratio of the perovskite structure in a crystal structure of the composite oxide is 5% or more, and/or 99% or less.

In some embodiments, the perovskite structure of the composite oxide of the catalyst shows significant peaks or main peaks (i.e. peaks being among the 5 largest peak intensities) at diffraction angles of about 32.9° and about 23.4°, which are characteristic of the perovskite crystal LaCeAlO₃. In further embodiments, the catalyst shows no diffraction peaks or low intensity peaks at about 28.3° and about 32.8°, thereby showing substantial absence or less than 10%, less than 5%, less than 2%, or less than 1% cerium oxide (CeO₂) in the catalyst structure. The term "peaks" means peaks at 2θ in a XRD graph, using a wavelength of Cu Kα (1.5428 Å), and the term "about" means 2θ tolerance ranges of ± 0.5 °.

In some embodiments, the catalyst has a dispersion amount of active metal, such as ruthenium, measured using the carbon monoxide adsorption method, of 30% or more, preferably 50% or more. The dispersion (%) is calculated using Equation 2: Dispersion (%) = (Content of active metal exposed to surface of catalyst measured by carbon monoxide/Content of active metal used in catalyst) × 100.

In some embodiments, the catalyst may be obtained by the methods of the present disclosure and one or more embodiments thereof.

Further, the catalyst of the present disclosure can be beneficially and effectively used as a catalyst in a process for decomposition of ammonia to obtain hydrogen.

### [BRIEF DESCRIPTION OF THE DRAWINGS]

The above and other objects, features and other advantages of the present disclosure will be more clearly understood from the following detailed description taken in conjunction with the accompanying drawings, in which:
FIG. 1 is a schematic process flowchart for describing a method of preparing an ammonia decomposition catalyst according to exemplary embodiments; and
FIG. 2 is an X-ray diffraction graph of composite oxides according to exemplary embodiments.

### [DETAILED DESCRIPTION OF THE INVENTION]

According to embodiments of the present disclosure, a method of preparing an ammonia decomposition catalyst is provided.

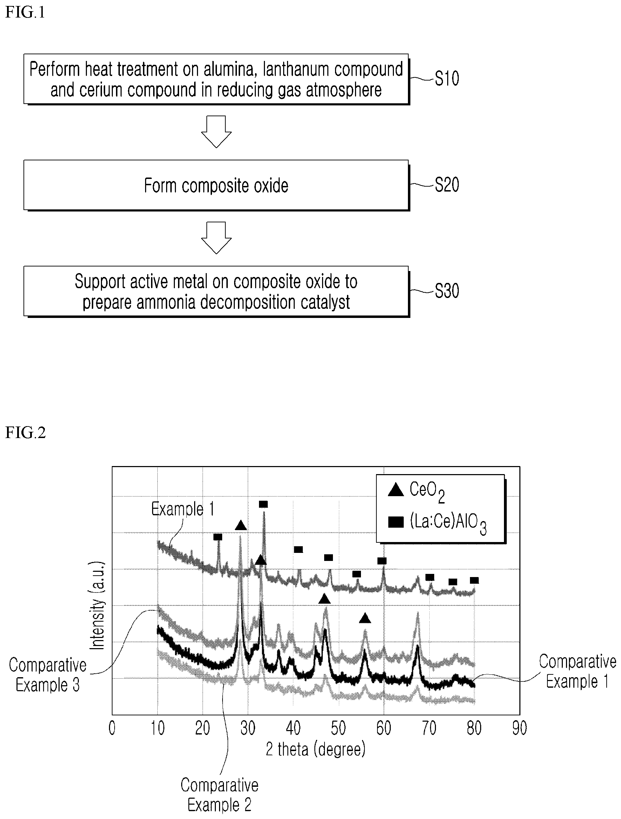

FIG. 1 is a schematic process flowchart for describing a method of preparing an ammonia decomposition catalyst according to exemplary embodiments; and

Referring to FIG. 1, heat treatment is performed on alumina, a lanthanum compound and a cerium compound in a reducing gas atmosphere (e.g., step S10). The heat treatment is suitably applied to a mixture of alumina, the lanthanum compound and the cerium compound. The mixture may be formed in deionized water, and mixed at room temperature to prepare an aqueous solution or dispersion.

In some embodiments, the lanthanum compound may use at least one of lanthanum metal or a lanthanum compound, such as a nitrate, an oxide, a chloride, a bromide, a fluoride, a hydroxide, a carbonate, an acetate, a sulfate, a carbonate, a naphthenate, an isopropoxide and/or an organometallic complex of lanthanum. These may be used alone or in combination of two or more thereof.

In one embodiment, the lanthanum compound may include lanthanum nitrate. The lanthanum nitrate can be completely decomposed in the heat treatment process, such that no residue may remain on the catalyst. Therefore, there is no need to perform a subsequent process for removing the nitrate, and thereby process efficiency and economic advantages may be improved. In addition, the nitrate may be supplied in large quantities, such that catalyst production costs may be reduced, and the economic advantages of the process may be improved.

In some embodiments, the cerium compound may use at least one of cerium metal or a cerium compound, such as a nitrate, an oxide, a chloride, a bromide, a fluoride, a hydroxide, a carbonate, an acetate, a sulfate, a carbonate, a naphthenate, an isopropoxide and/or an organometallic complex of cerium. These may be used alone or in combination of two or more thereof.

In one embodiment, the cerium compound may include cerium nitrate. The cerium nitrate can be completely decomposed in the heat treatment process, such that no residue may remain on the catalyst. Therefore, there is no need to perform a subsequent process for removing the nitrate, and thereby the economic advantages of the process may be improved. In addition, the nitrate may be supplied in large quantities, such that the economic advantages in terms of the catalyst production costs may be improved.

In some embodiments, the alumina support may include Al₂O₃. Al₂O₃ may have improved stability at an operation temperature of the ammonia decomposition catalyst. Therefore, the dispersion of the ammonia catalyst may be improved by the alumina support.

In one embodiment, the alumina support may include alpha-alumina (α-Al₂O₃), beta-alumina (β-Al₂O₃), delta-alumina (δ-Al₂O₃), eta-alumina (η-Al₂O₃) and/or theta-alumina (θ-Al₂O₃).

According to exemplary embodiments, the alumina, the lanthanum compound and the cerium compound is subjected to heat treatment to form an alumina support and a composite oxide (e.g., step S20).

For example, the alumina support may be formed from a portion of the alumina by the heat treatment process. In addition, lanthanum and cerium may be doped on the surface of the alumina to form a composite oxide including aluminum, lanthanum and cerium on the alumina support.

According to exemplary embodiments, the composite oxide composite oxide formed on the alumina support may have a perovskite structure. For example, the alumina, the lanthanum compound and the cerium compound may be subjected to heat treatment in a reducing gas atmosphere, such that lanthanum and cerium may be dissolved in the alumina so as to form a perovskite crystal structure.

Perovskite has a three-dimensional crystal structure formed by combining two types of cations and one type of anion, and may mean the same type of a crystal structure as the crystal structure of calcium titanium oxide (CaTiO₃). For example, perovskite may have a general formula such as ABX₃ or ABCX₃, and in the general formula, X atoms are located at a center of each crystal plane.

Since the composite oxide has a perovskite structure, high-temperature stability of the composite oxide may be improved. In addition, an active metal such as a transition metal may be more easily supported or doped in the composite oxide even at a relatively low temperature.

When the metal compound includes cerium, etc., the composite oxide having a perovskite structure may not be smoothly formed under heat treatment conditions such as an ambient atmosphere, an inert atmosphere or an oxygen atmosphere. For example, when performing heat treatment on the above-described metal compounds in an inert atmosphere or an ambient atmosphere, the composite oxide formed therefrom may have a mixed oxide structure of lanthanum-cerium composite oxide and alumina in a high ratio among the crystal structures. For example, the mixed oxide may mean a solid solution of heterogeneous metal oxides.

When the active metal (e.g., ruthenium) and the composite oxide are subjected to heat treatment together while the composite oxide has a mixed oxide structure, doping or supporting of the active metal into the composite oxide may be hindered. Accordingly, the dispersion of the active metal in the composite oxide may be decreased.

According to exemplary embodiments, the composite oxide of the catalyst shows significant peaks or main peaks (i.e. peaks being among the 5 largest or among the 3 largest peak intensities) at diffraction angles 2θ of 32.9°± 0.5° and 23.4° ± 0.5 °, which are characteristic of the perovskite crystal LaCeAlO₃. In further embodiments, the catalyst shows no diffraction peaks or low intensity peaks at 2θ 28.3° ± 0.5° and 32.8° ± 0.5°, thereby showing substantial absence or less than 10%, less than 5%, less than 2%, or less than 1% cerium oxide (CeO₂) as mixed oxide in the catalyst structure.

According to exemplary embodiments, the composite oxide may have a perovskite structure, such that the dispersibility of the active metal in the composite oxide may be improved.

In one embodiment, a ratio of the perovskite structure in the crystal structure of the composite oxide may be 5% or more and/or 99% or less, optionally may be in the range of 5% to 99%. Within these ratios and the above range, a high ratio of active site for the active metal may be provided. In addition, high selectivity for the ammonia decomposition catalyst may be provided, such that byproducts may be reduced and high-purity hydrogen may be obtained.

For example, the content of metal oxide crystal mixtures may be quantified through calibration based on XRD analysis using internal standards or through XRD peak analysis, such as the Rietveld refinement method. Additionally, the Data Processing Tool provided by the XRD measurement equipment may be utilized.

In one embodiment, reduction treatment of the alumina, the lanthanum compound and the cerium compound may include a method of using a reducing gas such as hydrogen, carbon monoxide, hydrocarbon, etc.

In some embodiments, hydrogen may be used as the reducing gas. In one embodiment, the reducing gas may be used diluted with nitrogen or carbon dioxide.

In some embodiments, the reducing gas may include hydrogen in an amount of 10% by volume ("vol%") to 100 vol% based on a total volume of the reducing gas. Within the above range, a ratio of the perovskite structure in the crystal structure of the composite oxide may be increased. Accordingly, the dispersibility of the active metal in the composite oxide may be further improved.

In one embodiment, the reducing gas may include hydrogen in an amount of 90 vol% to 100 vol%, or 99 vol% to 100 vol% based on the total volume of the reducing gas. For example, the reducing gas may be composed of 99.9 vol% or 100 vol% of hydrogen gas.

In some embodiments, a heat treatment temperature on the alumina, the lanthanum compound and the cerium compound may be greater than 600 °C. For example, the heat treatment temperature may be greater than 600 °C and 1,200 °C or lower, greater than 600 °C and 1,000 °C or lower, 800 °C to 1,000 °C, or 850 °C to 1,000 °C.

In the reducing gas atmosphere including the hydrogen, the higher the heat treatment temperature on the alumina, the lanthanum compound and the cerium compound within the above-described range, the higher the ratio of the perovskite structure in the crystal structure of the composite oxide.

For example, by performing heat treatment on the lanthanum compound and the cerium compound at a temperature of 900 °C or higher under a reducing gas atmosphere including 99.9 vol% or 100 vol% of hydrogen gas, the ratio of the perovskite structure in the crystal structure of the composite oxide may be formed to be 80% to 99%, or 90% to 99%.

In some embodiments, the heat treatment time may be 1 hour to 10 hours, 3 hours to 8 hours, or 4 hours to 6 hours.

In some embodiments, the alumina support may function as a support or base layer of the ammonia catalyst. For example, a mechanical strength of the alumina catalyst may be improved as the support of the ammonia catalyst.

In one embodiment, the composite oxide may further contain other rare earth metals in addition to the lanthanum and cerium. For example, the rare earth metal-containing compound may be subjected to heat treatment together with the alumina, the lanthanum compound and the cerium compound.

In one embodiment, the rare earth metal may include at least one of scandium (Sc), yttrium (Y), neodymium (Nd), samarium (Sm), gadolinium (Gd) and ytterbium (Yb). These may be included alone or in combination of two or more thereof.

In one embodiment, the rare earth metal-containing compound may use at least one of an oxide, a chloride, a bromide, a fluoride, a hydroxide, a carbonate, an acetate, a sulfate, a nitrate, a carbonate, a naphthenate, an isopropoxide and an organometallic complex of the rare earth metal. These may be used alone or in combination of two or more thereof.

In some embodiments, a molar ratio of cerium to lanthanum in the composite oxide may be 0.1 to 10, 0.2 to 5, or 0.3 to 3. Within the above range, an ammonia decomposition speed may be improved, and an ammonia conversion rate at a low temperature may be further improved.

According to exemplary embodiments, an active metal may be supported on the composite oxide (e.g., step S30). The active metal may be supported on the composite oxide to prepare an ammonia decomposition catalyst.

For example, the active metal may promote ammonia decomposition as an active component of the ammonia decomposition catalyst.

According to exemplary embodiments, the active metal may include an active catalyst.

According to exemplary embodiments, the active catalyst may include a transition metal and/or platinum metal, and for example, at least one of metals belonging to groups 8 to 10 in the periodic table.

In one embodiment, the active catalyst may include osmium (Os), nickel (Ni), iron (Fe), cobalt (Co), platinum (Pt), palladium (Pd), ruthenium (Ru), vanadium (V), copper (Cu), chromium (Cr), tungsten (W), molybdenum (Mo), iridium (Ir), rhodium (Rh), zirconium (Zr), etc.

In one embodiment, the ammonia decomposition catalyst may include a platinum metal as the active metal. The platinum metal has high ionization tendency thus to have high activity in oxidation/reduction reactions, and thereby the decomposition speed and conversion rate of ammonia may be further improved.

For example, the ammonia decomposition catalyst may include ruthenium as the active metal. Ruthenium has strong catalytic activity, such that a dehydrogenation decomposition reaction of ammonia and catalytic activity may be further improved.

According to exemplary embodiments, the active metal of the ammonia decomposition catalyst may further include a promoter as a cocatalyst. The promoter may include an alkali metal and/or alkaline earth metal, and for example, at least one of metals belonging to group 1 to group 2 in the periodic table.

In one embodiment, the promoter may include cesium (Cs), sodium (Na), potassium (K), lithium (Li), rubidium (Rb), francium (Fr), barium (Ba), calcium (Ca), strontium (Sr), beryllium (Be) and magnesium (Mg). These may be included alone or in combination of two or more thereof.

In one embodiment, the promoter may include an alkali metal. An alkali metal element may include one electron in the outermost electron shell thereof thus to act as an electron donor. In addition, the alkali metal element may increase the active site on the surface of the active catalyst, thereby suppressing aggregation of the active catalyst, and further improving the dispersion of the active catalyst. Accordingly, the alkali metal may further improve the promotion of the active catalyst in the chemical reaction as the promoter.

In some embodiments, the composite oxide and the active metal compound may be subj ected to heat treatment. For example, the active metal compound may be added to or mixed with the composite oxide, followed by performing heat treatment. Due to the heat treatment, the active metal derived from the active metal compound may be supported or doped in the composite oxide.

In one embodiment, the active metal compound may use at least one of a nitrate, an oxide, a chloride, a bromide, a fluoride, a hydroxide, a carbonate, an acetate, a sulfate, a carbonate, a naphthenate, an isopropoxide and an organometallic complex of the active metal. These may be used alone or in combination of two or more thereof.

In some embodiments, the heat treatment temperature on the composite oxide and the active metal compound may be 1,000 °C or lower or 900 °C or lower, and 200 °C or higher or 400 °C or higher. Within the above range, the activity and stability of the catalyst may be further enhanced.

In one embodiment, the heat treatment temperature on the composite oxide and the active metal compound may be 600 °C or lower. For example, the heat treatment temperature may be 200 °C to 600 °C, or 400 °C to 600 °C. When the heat treatment temperature is 600 °C or lower, the aggregation of the active metal due to the high temperature may be suppressed, and activity of the catalyst may be further improved. When the heat treatment temperature is 200 °C or higher, the metal may be sufficiently activated, such that performance of the ammonia decomposition catalyst may be improved.

In one embodiment, the heat treatment temperature on the composite oxide and the active metal compound (e.g., the heat treatment temperature in step S30) may be lower than the heat treatment temperature of the alumina, the lanthanum compound and the cerium compound (e.g., the heat treatment temperature in step S10). For example, the active metal may be supported on the composite oxide having a perovskite structure, thus to prepare an ammonia decomposition catalyst having a perovskite structure without an additional crystallization process after supporting the active metal. Accordingly, the active metal may be supported at a relatively low temperature, such that sintering of the active metal due to the high temperature may be prevented, and the dispersion and usage rate of the active metal may be improved.

In one embodiment, the process of supporting the active metal on the composite oxide may be performed in a reducing gas atmosphere. For example, the composite oxide and the active metal compound may be subjected to heat treatment in the reducing gas atmosphere.

In one embodiment, the reduction treatment of the composite oxide and the active metal compound may include a method using a reducing gas such as hydrogen, carbon monoxide, or hydrocarbon, or a method adding a reducing agent such as hydrogen peroxide, hydrogen sulfide, lithium aluminum hydride, or lithium borohydride, etc.

In one embodiment, the composite oxide and the active metal compound may be subjected to heat treatment in a reducing gas atmosphere, for example, in a hydrogen atmosphere.

In one embodiment, the reducing gas may be used by diluting it with nitrogen or carbon dioxide.

In one embodiment, the reducing gas may include 10 to 100 vol% of hydrogen based on the total volume of the reducing gas. Accordingly, the dispersibility of the active metal in the composite oxide may be further improved.

In one embodiment, the reducing gas may include 90 vol% to 100 vol%, or 99 vol% to 100 vol% of hydrogen based on the total volume of the reducing gas. For example, the reducing gas may be composed of 99.9 vol% or 100 vol% of hydrogen gas.

In some embodiments, a content of the active catalyst supported on the composite oxide may be 1.6% by weight ("wt%") or less, 1.5 wt% or less, or less than 1.5 wt% based on a total weight of the composite oxide and the active catalyst.

In some embodiments, the content of the active catalyst supported on the composite oxide may be 0.1 wt% or more, or 0.1 wt% to 1.3 wt%, 0.15 wt% to 1.25 wt%, 0.2 wt% to 1.0 wt%, or 0.5 wt% to 0.8 wt% based on the total weight of the composite oxide and the active catalyst.

In some embodiments, the content of the promoter may be 0.5 wt% to 6 wt% based on the total weight of the composite oxide and the active metal. Within the above range, the activity of the ammonia decomposition catalyst may be further enhanced.

According to exemplary embodiments, the active metal may be supported in the composite oxide having a perovskite crystal structure, such that the dispersibility may be improved even if the content of the active metal is small. Therefore, an amount of the active metal used may be reduced, such that an ammonia decomposition catalyst having high efficiency may be prepared at low costs.

In one embodiment, when the content of the active catalyst is 0.1 wt% or more, the active site of the ammonia decomposition catalyst may be further increased. Therefore, the activity of the ammonia decomposition catalyst may be enhanced, thereby improving the decomposition speed and conversion rate of ammonia.

In some embodiments, the composite oxide may include a compound represented Formula 1 below.

[Formula 1] LaₓCe₁₋ₓAlO₃

In Formula 1 above, x may be in a range of 0.05<x≤0.95.

In one embodiment, in Formula 1 above, x may be in a range of 0.2<x≤0.85, for example, 0.4<x≤0.8, or 0.45<x≤0.75. When contents of La and Ce are within the above range, the ammonia decomposition activity may be further improved, and the catalyst may have a high ammonia conversion rate even at a low temperature.

In some embodiments, the composite oxide may be formed by doping lanthanum derived from the lanthanum compound and cerium derived from the cerium compound on the surface of the alumina.

In one embodiment, the composite oxide may be formed by doping the lanthanum and the cerium on the surface of the alumina. For example, the lanthanum and the cerium may be uniformly dispersed in the alumina to be doped thereon.

In one embodiment, the lanthanum and the cerium doped in the alumina may have a form of nanoparticles. For example, the lanthanum and the cerium may have a form of nanoparticles with a diameter of 1 nm to 500 nm. The diameter of the above particles can be measured, for example, using a high-resolution transmission electron microscope.

In one embodiment, the oxides formed as the composite oxide on the alumina support may further include other rare earth metals in addition to the lanthanum and cerium. For example, the oxides may include at least one of scandium (Sc), yttrium (Y), neodymium (Nd), samarium (Sm), gadolinium (Gd) and ytterbium (Yb). These may be included alone or in combination of two or more thereof.

The ammonia decomposition catalyst according to embodiments of the present disclosure may include an alumina support, a composite oxide formed on the alumina support, and an active metal including ruthenium supported on the composite oxide.

The composite oxide may include lanthanum, cerium and aluminum. For example, the composite oxide may be a metal oxide formed by dissolving lanthanum, cerium and aluminum together.

According to exemplary embodiments, a content of the ruthenium may be less than 1.5 wt% based on the total weight of the composite oxide and the active metal.

In some embodiments, the content of the ruthenium supported on the composite oxide may be 0.1 wt% to 1.3 wt%, 0.15 wt% to 1.25 wt%, 0.2 wt% to 1.0 wt%, or 0.5 wt% to 0.8 wt% based on the total weight of the composite oxide and the active metal.

According to exemplary embodiments, the active metal may further include a promoter. The above-described promoter may include an alkali metal and/or an alkaline earth metal.

In some embodiments, the composite oxide may have a perovskite structure. As the composite oxide has the perovskite structure, the high-temperature stability and catalytic activity of the ammonia catalyst may be further improved, and the dispersibility of the active metal in the composite oxide may be improved.

In one embodiment, the ratio of the perovskite structure in the crystal structure of the composite oxide may be 5% to 99%. Within the above range, a high ammonia conversion rate may be obtained even at a low temperature due to the electronic contribution effect to the active metal.

In some embodiments, the catalyst has a dispersion amount, measured using the carbon monoxide adsorption method, of 30% or more, preferably 50% or more. The dispersion (%) is calculated using Equation 2: Dispersion (%) = (Content of active metal exposed to surface of catalyst measured by carbon monoxide/Content of active metal used in catalyst) × 100.

In some embodiments, the catalyst for ammonia decomposition may be obtained by the methods of the present disclosure and one or more embodiments thereof.

Further, the catalyst of the present disclosure can be beneficially and effectively used as a catalyst in a process for decomposition of ammonia to obtain hydrogen.

### Preparative Example: Composite oxide on alumina support

### (1) Example

### 1) Preparation of composite oxide

10 g of alumina, 2.85 g of lanthanum nitrate hydrate (99%, Sigma), and 2.70 g of cerium nitrate hydrate (99%, Sigma) were added to deionized water, and mixed at room temperature to prepare an aqueous solution.

The aqueous solution was dried at room temperature, and a first heat treatment was performed at 900 °C for 4 hours in a 100% hydrogen atmosphere to prepare an alumina support and a lanthanum-cerium-alumina-containing composite oxide formed on the alumina support.

### 2) Preparation of ammonia catalyst

An ammonia catalyst precursor was prepared by impregnating ruthenium nitrosyl nitrate as a ruthenium compound into 1 g of the composite oxide. The ruthenium compound was added so that a content of ruthenium (Ru) was 0.8 wt% based on the total weight of the composite oxide and ruthenium.

The ammonia catalyst precursor was dried, and a second heat treatment was performed at a temperature of 600°C for 4 hours in a 100% hydrogen atmosphere to prepare an ammonia decomposition catalyst.

### (2) Comparative Examples 1 to 3

A lanthanum-cerium-alumina-containing composite oxide was formed in the same manner as in Example 1, except that the heat treatment conditions in the composite oxide formation step were changed as listed in Table 1 below.

**[TABLE 1]**

| | First heat treatment atmosphere | First heat treatment temperature (°C) |
|---|---|---|
| Example 1 | 100 vol% hydrogen | 900 |
| Comparative Example 1 | 100 vol% ambient | 500 |
| Comparative Example 2 | 100 vol% helium | 900 |
| Comparative Example 3 | 100 vol% ambient | 900 |

### (3) Measurement of composite oxide crystals

Before preparing the ammonia catalyst, crystal structures of the composite oxides prepared in Example 1 and Comparative Examples 1 to 3 were measured.

FIG. 2 is an XRD graph of the composite oxides of the examples and comparative examples. In FIG. 2, □ is a peak of a crystal structure of perovskite (LaCeAlO₃), and Δ is a peak of a crystal structure of CeO₂.

Referring to FIG. 2, it can be observed that unique diffraction peaks (about 32.9° and about 23.4°) of the perovskite (LaCeAlO₃) are formed significantly in Example 1.

In Comparative Examples 1 to 3, it can be observed that unique diffraction peaks (28.3° and 32.8°) of the cerium oxide (CeO₂) mixed oxide are formed significantly.

### (4) Examples 1 to 4, and Comparative Examples 4 to 8

In the examples and comparative examples, ammonia decomposition catalysts were prepared in the same manner as in Example 1, except that the first heat treatment temperature, the second heat treatment temperature and the ruthenium content were changed as listed in Table 2 below.

In the comparative examples, ammonia decomposition catalysts were prepared in the same manner as in Example 1, except that the first heat treatment conditions, the second heat treatment conditions and the ruthenium content were changed as listed in Table 2 below.

In Table 2 below, the ruthenium content (wt%) was calculated Equation 1 below. Ruthenium content (wt%) = [Ruthenium content (weight) included in ruthenium compound/{Content (weight) of composite oxide + Ruthenium content (weight) included in ruthenium compound}] × 100

**[TABLE 2]**

| | First heat treatment atmosphere | First heat treatment temperature (°C) | Ruthenium content (wt%) | Second heat treatment temperature (°C) |
|---|---|---|---|---|
| Example 1 | 100 vol% hydrogen | 900 | 0.8 | 600 |
| Example 2 | 100 vol% hydrogen | 900 | 0.8 | 900 |
| Example 3 | 100 vol% hydrogen | 900 | 1.5 | 900 |
| Example 4 | 100 vol% hydrogen | 600 | 1.5 | 600 |
| Comparative Example 4 | 100 vol% ambient | 900 | 1.6 | 300 |
| Comparative Example 5 | 100 vol% ambient | 900 | 1.6 | 500 |
| Comparative Example 6 | 100 vol% ambient | 900 | 1.6 | 600 |
| Comparative Example 7 | 100 vol% ambient | 900 | 1.6 | 700 |
| Comparative Example 8 | 100 vol% ambient | 900 | 1.6 | 800 |

### Experimental Example

### (1) Measurement of XRD

Composite oxides were obtained from the catalysts prepared in the examples and comparative examples. The X-ray diffraction distributions of the composite oxides were measured.

Specifically, crystal structures of the composite oxides were measured by X-ray diffraction (XRD) analysis under conditions of 300 mA current, 50 kV voltage, wavelength of Cu Kα (1.5428 Å), 5 degree min⁻¹ scan speed, and 2θ = 10° to 80°.

### (2) Measurement of dispersion

The catalysts prepared in the examples and comparative examples were measured using a carbon monoxide adsorption evaluation device (Micrometirics, ASAP 2020). 0.1 g of catalyst was charged into an adsorption tube, followed by reducing at 300°C and decreasing the temperature to measure the saturated adsorption amount of carbon monoxide at room temperature. The dispersion was calculated by considering that the adsorbed carbon monoxide molecules were due to combination adsorption with the ruthenium catalyst.

The dispersion (%) was calculated using Equation 2 below. Dispersion (%) = (Content of active metal exposed to surface of catalyst measured by carbon monoxide/Content of active metal used in catalyst) × 100

### (3) Measurement of decomposition rate according to ammonia conversion temperature

The exhaust gas after the ammonia decomposition reaction was measured using a gas chromatography (GC) equipped with a thermal conductivity detector (TCD), and the residual ammonia content was obtained from a calibration curve using standard gas (ammonia: Shinheung Industrial Gas, dilution gas: nitrogen), and the decomposition rate was calculated in Equation 3 below.

That is, the ammonia decomposition rate (%) was calculated using Equation 3 below. Ammonia decomposition rate (%) = {(Supply ammonia content - Residual ammonia content)/Supply ammonia content} × 100.

Evaluation results are described in Table 3 below.

**[TABLE 3]**

| | Crystal structure | Dispersion (%) | Ammonia decomposition rate according to temperature (%) | | | |
|---|---|---|---|---|---|---|
| | | | 400°C | 450°C | 500°C | 550°C |
| Example 1 | P | 53.3 | 40 | 70 | 90 | 99 |
| Example 2 | P | 48.3 | 30 | 54 | 80 | 97 |
| Example 3 | P | 32.6 | 44 | 74 | 93 | 98 |
| Example 4 | P+M | 61 | 44 | 71 | 90 | 98 |
| Comparative Example 4 | P+M | 38.7 | 38 | 69 | 92 | 98 |
| Comparative Example 5 | P+M | 67.5 | 38 | 66 | 90 | 98 |
| Comparative Example 6 | P+M | 25.3 | 53 | 78 | 93 | 98 |
| Comparative Example 7 | P+M | 25.4 | 50 | 75 | 93 | 98 |
| Comparative Example 8 | P+M | 46.6 | 49 | 78 | 93 | 98 |

In Table 3 above, P means the perovskite, and M means the mixed oxide.

Referring to Table 3, the composite oxides of the ammonia decomposition catalysts prepared in Examples 1 to 3 had a crystal structure of perovskite, respectively.

In the case of Examples 1 and 2, even though the ammonia decomposition catalyst included a relatively small amount of ruthenium, the ammonia decomposition rate was maintained high. In the case of Example 1, where the second heat treatment temperature was relatively low, the dispersion was not decreased, such that the ammonia decomposition rate was further improved.

In the case of Example 4, the first heat treatment was performed at a relatively low temperature, such that the composite oxide included a crystal structure in the form of the mixed oxide (M). However, in Example 4, even though the preparation process of the ammonia decomposition catalyst was performed at a relatively low temperature, the first heat treatment was conducted in a reducing gas atmosphere, such that the dispersion and ammonia decomposition rate were improved compared to the comparative examples.

In the case of the comparative examples, the first heat treatment was performed in an ambient atmosphere, and the composite oxide included a mixed oxide structure in the crystal structure. Accordingly, even though the ruthenium content was higher than that of Examples 1 to 4, the ammonia decomposition rate was equivalent or deteriorated at a low dispersion or relatively low temperature.

Therefore, it was confirmed that the ammonia decomposition catalyst according to the embodiments might improve the decomposition rate of ammonia despite including a small amount of ruthenium, and might also secure cost reduction and high-temperature stability.

## Claims

1. A method of preparing a catalyst for ammonia decomposition, the method comprising:
performing heat treatment on alumina, a lanthanum compound and a cerium compound in a reducing gas atmosphere including hydrogen to form a composite oxide on an alumina support; and
supporting an active metal including ruthenium on the composite oxide.

2. The method according to claim 1, wherein the active metal further comprises a promoter including at least one of cesium (Cs), sodium (Na), potassium (K), lithium (Li), rubidium (Rb), francium (Fr), barium (Ba), calcium (Ca), strontium (Sr), beryllium (Be) and magnesium (Mg).

3. The method according to claim 1 or 2, wherein the composite oxide is formed by performing heat treatment on the alumina, the lanthanum compound and the cerium compound at a temperature of greater than 600 °C and 1,000 °C or lower, preferably at a temperature in a range of 800 °C to 1,000 °C .

4. The method according to any one of claims 1 to 3, wherein the reducing gas includes hydrogen in an amount of 10% by volume to 100% by volume based on a total volume of the reducing gas.

5. The method according to any one of claims 1 to 4, wherein the composite oxide contains lanthanum, cerium and aluminum,
optionally wherein the composite oxide is formed by doping lanthanum derived from the lanthanum compound and cerium derived from the cerium compound on a surface of the alumina, preferably wherein the lanthanum compound includes lanthanum nitrate, and the cerium compound includes cerium nitrate..

6. The method according to any one of claims 1 to 5, wherein the alumina support includes Al₂O₃.

7. The method according to any one of claims 1 to 6, wherein the composite oxide has a perovskite structure, preferably a ratio of the perovskite structure in a crystal structure of the composite oxide is 5% or more, and/or 99% or less.

8. The method according to any one of claims 1 to 7, wherein the step of supporting the active metal including ruthenium on the composite oxide comprises mixing the composite oxide and the active metal including ruthenium, and performing heat treatment, and/or
wherein the step of supporting the active metal including ruthenium on the composite oxide is performed in a reducing gas atmosphere.

9. The method according to claim 8, wherein a heat treatment temperature on the composite oxide and the active metal is equal to, or preferably is lower than a heat treatment temperature on the alumina, the lanthanum compound and the cerium compound,
optionally wherein the heat treatment temperature on the composite oxide and the active metal is in a range of 200 °C to 1,000 °C, preferably 400 °C to 800 °C.

10. The method according to any one of claims 1 to 9, wherein a content of ruthenium supported on the composite oxide is 1.6% by weight or less, preferably is 1.5% by weight or less or is less than 1.5% by weight, more preferably is in a range of 0.1% by weight to 1.3% by weight, based on a total weight of the composite oxide and the active metal.

11. The method according to any one of claims 1 to 10, wherein the lanthanum and cerium doped on the surface of the alumina have a form of nanoparticles, and the particles have a diameter of 1 nm to 500 nm.

12. A catalyst suitable for ammonia decomposition, the catalyst comprising a lanthanum cerium composite oxide on an alumina support; and an active metal including ruthenium supported on the composite oxide,
wherein the composite oxide has a perovskite structure,
and wherein the ruthenium content (wt%), as calculated by Equation 1 is 1.5wt.% or lower:
Ruthenium content (wt%) = [Ruthenium content (weight) included in ruthenium compound/{Content (weight) of composite oxide + Ruthenium content (weight) included in ruthenium compound}] × 100.

13. The catalyst according to claim 12, wherein the lanthanum cerium composite oxide mainly shows a perovskite structure, preferably a ratio of the perovskite structure in a crystal structure of the composite oxide is 5% or more, and/or 99% or less.

14. The catalyst according to claim 12 or 13, which has a dispersion amount of ruthenium as the active metal, measured using the carbon monoxide adsorption method described in the description, of 30% or more, preferably 50% or more;
wherein the dispersion (%) is calculated using Equation 2: Dispersion (%) = (Content of active metal exposed to surface of catalyst measured by carbon monoxide/Content of active metal used in catalyst) × 100.

15. Use of the catalyst according to any one of claims 12 to 14 in a process for decomposition of ammonia to obtain hydrogen.
